(19) Europäisches Patentamt
European Patent Office
Office européen des brevets

(11) **EP 3 545 667 B1**

(12) **EUROPEAN PATENT SPECIFICATION**

(45) Date of publication and mention
of the grant of the patent:
**28.10.2020   Bulletin 2020/44**

(21) Application number: **16829143.3**

(22) Date of filing: **28.11.2016**

(51) Int Cl.:
*H04L 29/08* (2006.01)        *H02J 7/35* (2006.01)

(86) International application number:
**PCT/TR2016/050467**

(87) International publication number:
**WO 2018/097807 (31.05.2018 Gazette 2018/22)**

(54) **SYSTEM AND METHOD OF ELECTRIC FIELD ENERGY HARVESTING FROM LIGHTING ELEMENTS FOR INTERNET OF THINGS**

SYSTEM UND VERFAHREN ZUR GEWINNUNG VON ELEKTRISCHER FELDENERGIE AUS BELEUCHTUNGSELEMENTEN FÜR INTERNET DER DINGE

SYSTÈME ET PROCÉDÉ DE COLLECTE D'ÉNERGIE DE CHAMP ÉLECTRIQUE À PARTIR D'ÉLÉMENTS D'ÉCLAIRAGE POUR L'INTERNET DES OBJETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019   Bulletin 2019/40**

(73) Proprietor: **KOC Universitesi**
**34450 Istanbul (TR)**

(72) Inventors:
• **CETINKAYA, Oktay**
**34450 Sariyer/Istanbul (TR)**
• **AKAN, Ozgur Baris**
**34450 Sariyer/Istanbul (TR)**

(74) Representative: **Atalay, Baris**
**Alfa Patent Stan Advoka Ltd. Co.**
**Dumen Sok**
**Gumussuyu Is Merkezi, No: 11, Kat.4**
**34427 Beyoglu/Istanbul (TR)**

(56) References cited:
**US-A1- 2002 074 898      US-A1- 2013 015 711**
**US-A1- 2016 211 742**

**Description**

**Technical Field of the Present Invention**

The present invention relates to a system for electric field energy harvesting to provide energy to autonomous communications systems such as wireless sensor networks (WSNs) and Internet of Things (IoT) devices, architectures.

**Background of the Present Invention**

Internet of Things provide a link between cyber and physical world by connecting devices over the Internet. This enables accessing information about the areas of interest in a remote and easy way. However, this broad vision necessitates combining different technologies and communication solutions. The key enabling technology for this paradigm is wireless sensor networks since they observe the physical world, digitize the observations, and send their readings to the Internet; thereby the sensor observations can be accessed from anywhere.

As majority of sensor nodes sense and transmit data intermittently, a typical battery depletes in less than a year. If the number of deployed sensors and their energy requirement in IoT domain is considered, there is a clear need of an auxiliary or even a distinct source. However, this may or may not be an option for each application mostly due to size constraints, maintenance and/or deployment costs. Large number of sensor node deployments and their individual energy demands require energy efficient solutions and sustainable use of resources. This vision promotes energy efficient solutions by encouraging battery-less systems which accordingly enables energy harvesting communications.

Energy harvesting refers to gathering enough power to operate a system by scavenging a stray source or converting energy from one form to another. There are several potential sources to gather energy such as lights, temperature gradients, motion variations, radio frequency (RF) waves and electromagnetic (EM) fields. Thanks to the advances in ultra-low power transceiver technology, energy harvesting methods become more applicable to resolve the ongoing lifetime constraints of wireless devices. Although the conducted research theoretically revealed the capabilities of harvesting techniques in providing adequate and stable power, rising and diversified needs of today's communication architectures require more enhanced, robust and durable power provision systems. In this regard, Electric Field Energy Harvesting (EFEH) stands as the most promising candidate with the characteristics of ambient variable in-dependency, sufficient power rating, low complexity, and excellent energy continuity.

Existing methods of energy harvesting is broadly categorized into two groups as Harvest-Use and Harvest-Store-Use, where these can be further sub-categorized as controllable and uncontrollable. By regarding this separation and the frequency of preference, some leading indoor harvesting methods are discussed below.

When indoor areas such as homes, offices, and any commercial or public facilities are envisioned, the number of applicable energy harvesting procedures is further disembarked because it cannot be mentioned about the presence of environmental sources anymore. In other words, artificial lights, motion and temperature variations, RF signals and electromagnetic fields are the only available sources that can be exploited to gather energy in closed environments.

Energy harvesting form light sources is a well-established method of power provision that gathers energy from ambient lights, either from sun or artificial light sources, with respect to a phenomenon called as photo-voltaic (PV) effect. In outdoor, for the monitoring of overhead power lines, solar cell inlaid photo-voltaic panels are used for converting solar energy into electricity. For indoor applications, specialized photo-voltaic materials, which are better suited for diffused lights, are employed for taking advantage of the rays that are being emitted from ambient lighting elements. As the PV modules are getting cheap, easy to use and sufficient each passing day, due to the dramatic fluctuations on the output power, and ongoing installation and maintenance costs, they have limited applicability in mission critical applications.

Kinetic energy harvesting (KEH) is the conversion of ambient mechanical energy into electric power. Wind turbines, anemometers and piezoelectric materials are being developed for attaining energy from highly random and mostly unpredictable motion variations driven by external factors. KEH is frequently preferred in indoor and outdoor domain, as there is a variety of sources that can be conveniently exploited to drive low power consumptive wireless autonomous devices.

However, constituting a generalized harvesting system for especially vibrating sources is an ongoing challenging issue, because the conversion efficiency highly varies with the resonant frequency of the vibration, which necessitates a specialized design for each source.

Thermal energy harvesting, i.e., thermoelectric generation (TEG), is simply based on converting temperature gradients into utilizable electric power with respect to the Seeback Effect occurred in semiconductor junctions. TEG is an innate power provision technique for Smart Grid communications, in which temperature swings between the power line and the environment is used to extract energy. In small scale, peltier/thermoelectric coolers and thermocouples are widely used for building delay-tolerant wireless indoor networks. Although harnessing power from temperature gradients sounds promising, there is a fundamental limit, namely Carnot cycle, to the maximum efficiency at which energy can be harvested from a temperature difference.

Regarding the intensive use of GSM networks like wireless technologies in urban areas, Radio Frequency (RF) signals attracted harvesting tendencies in recent years. RF energy harvesting is simply based on collecting RF signals emitted from base stations, modems, smartphones and any other wireless signal sources by using large aperture power receiving antennae, and then converting them into utilizable DC power for the sensor nodes. Even though this method serves reliable solutions regardless of the environmental variables, the necessity of close deployment of receiver antennae to network transmitters; and the fact that it provides quite low power density profited from an unpredictable source; compel its utilization in some applications.

In addition to aforesaid approaches, wireless networks can also be powered by exploiting electromagnetic fields around the alternating current carrying conductors. To do that, current transformers are employed to gather energy from the ambient magnetic field by clamping around the power cords. This operation limits the applicability of magnetic field related approaches in some cases, in which it is not that practical to clamping conductor. This technique provides an adequate rate of power; and less complex utilization; however, the availability of energy is affected severely by the current density on the transmission line. As the magnetic field occurs due to alternating current, the line must be loaded to allow sufficient current flow.

There is plenty of energy harvesting technologies in the state of the art, including applications making use of electric field to provide energy. The counterparts of electric field energy harvesting techniques depend strongly on environmental conditions, grid-based variables or any other uncontrollable parameters. In other words, electric field is the only source that is neither intermittent nor dependent on the load. As the voltage and the frequency are firmly regulated and maintained, the electric field is therefore stable and predictable in its behavior. Thus, it can be referred as the most promising way to compose long-term and self-sustainable communication systems notwithstanding the ambient factors.

A prior art publication in the technical field of the present invention may be referred as US2016211742 A1, which discloses a self-powered energy harvesting system for harvesting electrical energy from the environment for feeding a load, the system comprising a first energy harvester for generating first electrical energy having a first input voltage from the environment; a first local storage unit for storing the first electrical energy after conversion; a passive startup circuit connected to the first energy harvester for harvesting, converting and storing the first electrical energy inside the first local storage unit; a second energy harvester for generating second electrical energy having a second input voltage from the environment; and an active circuit connected to the first local storage unit, to the second energy harvester and to the load for extracting and using the first electrical energy stored in the first local storage unit for harvesting, converting and directing the second electrical energy to the load, the second input voltage being insufficient for operating the active circuit. There is also provided a passive startup circuit and an energy-aware time multiplexer for combining energy originating from the different energy harvesting sources for use with energy harvesting systems.

US2004078662 also discloses a device for powering a load from an ambient source of energy. An energy harvesting device for harvesting energy from the ambient source is presented wherein the rate of energy harvested from the ambient source of energy is below that required for directly powering the load. A storage device is connected to the energy harvesting device. The storage device receives electrical energy from the energy harvesting device and stores the electrical energy. A controller is connected to the storage device for monitoring the amount of electrical energy stored in the storage device and for switchably connecting the storage device to the load when the stored energy exceeds a first threshold. Document US 2002/074898 A1 discloses a wireless switch having a twenty-year life energy harvesting arrangement for self-powering a wireless transmitter.

The present invention on the other hand provides an energy harvesting system that enables ease of implementation, reduces circuit complexity, and provides highly increased efficiency without any interruption, so that it allows self-sufficient wireless sensor networks to be built for IoT applications such as online condition monitoring, asset management and smart control. When comparing the invention with the related prior art which is bulky, hard to employ and operating as reducing the luminaire efficiency, the present invention affords a more enhanced system eliminating the above-mentioned disadvantages.

The present invention provides a system and method for exploiting electric field directly benefitting from said electric field, which is directly adaptable to existing infrastructures while at the same time resolving circuit complexity.

Therefore, the present invention is devised under the recognition that energy harvesting from electric field by means of a specially configured compact energy harvesting means remains a need.

## Objects of the Present Invention

Primary object of the present invention is to provide a system and method of electric field energy harvesting to power wireless sensor networks.

A further object of the present invention is to provide a harvesting plate in the form of a sheet element to collect the electric field.

Another object of the present invention is to use built-in reflectors as harvesters to collect the electric field.

The present invention provides an electric field energy harvesting system that increases the power extraction efficiency, as defined in the characterized portion of Claim 1.

**Brief Description of the Figures of the Present Invention**

Accompanying drawings are given solely for the purpose of exemplifying a system and method for electric field energy harvesting whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention. The drawings are only exemplary in the sense that they do not necessarily reflect the actual dimensions and relative proportions of the respective components of the system as long as no specific information is provided in the detailed description of the present invention.

Fig. 1 demonstrates a conventional overhead 4-light fluorescent troffer model.

Fig. 2 demonstrates a troffer with the electric field energy harvesting circuit and harvesting plate according to an embodiment of the present invention.

Fig. 3 demonstrates the physical model of the electric field energy harvesting concept according to an embodiment of the present invention.

Fig. 4 demonstrates a simplified model for the electric field energy harvesting concept according to an embodiment of the present invention.

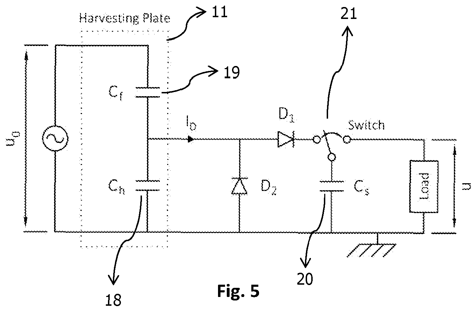

Fig. 5 demonstrates an equivalent circuit of the measurement system for the electric field energy harvesting concept according to an embodiment of the present invention.

Fig. 6 demonstrates the electric field distribution on the fluorescent bulb.

Fig. 7 demonstrates a troffer with the electric field energy harvesting circuit without harvesting plate according to another embodiment of the present invention.

Fig. 8 demonstrates a chart that describes time vs. accumulated voltage patterns for various capacitances according to embodiments with the harvesting plate according to the present invention.

Fig. 9 demonstrates a chart that describes time vs. gathered energy patterns for various capacitances according to embodiments with the harvesting plate according to the present invention.

Fig. 10 demonstrates a chart that describes duty cycle depiction of the proposed electric field energy harvesting architecture according to embodiments with the harvesting plate according to the present invention.

Fig. 11 demonstrates a chart that describes time vs. accumulated voltage/energy on storing capacitor, 0.1F 5.5V super-capacitor according to embodiments with the harvesting plate of the present invention.

**Detailed Description of the Present Invention**

The following numerals are referred to in the detailed description of the present invention:

11) Harvesting plate
12) Light fixture
13) Reflector
14) Electric field energy harvesting circuit
15) Fixture chest
16) Fluorescent bulb
17) Stray parasitic capacitance ($C_b$)
18) Ground capacitance ($C_h$)
19) Intermediate capacitance ($C_f$)
20) Storing capacitor ($C_s$)
21) Power conditioning circuit

The present invention is an electric field energy harvesting system to supply power to wireless autonomous devices such as wireless sensor network (WSN) devices. First embodiment of the invention proposes a harvesting plate (11) connected to an electric field energy harvesting circuit (14) in close proximity to overhead bulbs of a light fixture (12) such as a troffer.

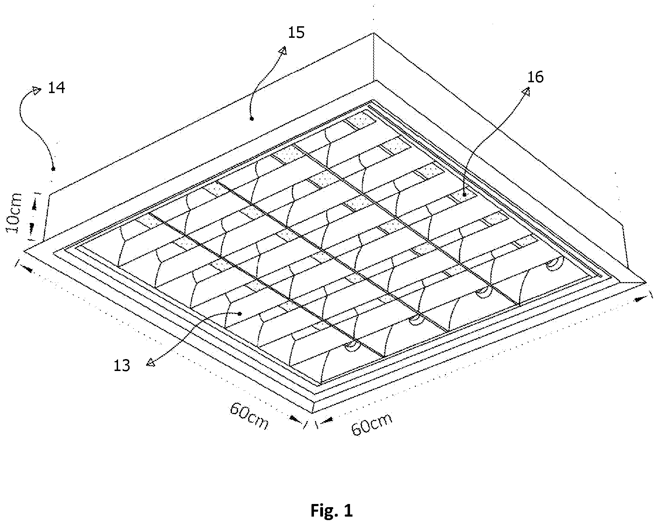

Conventional overhead 4-light fluorescent troffer model comprises a fixture chest (15) and fluorescent bulbs (16) as illustrated in Figure 1.

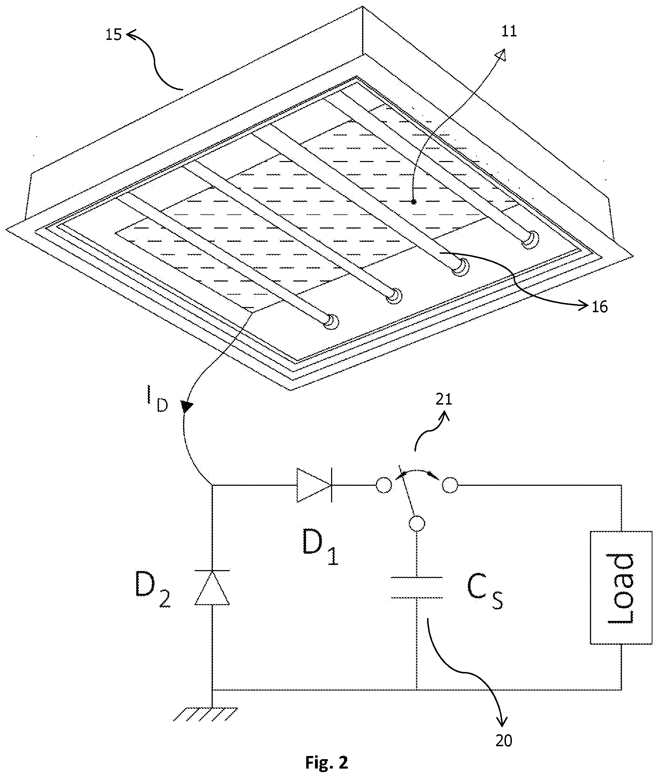

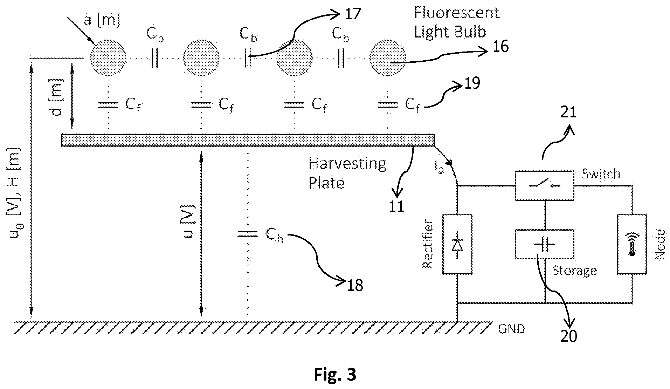

Figure 2 illustrates an embodiment of the present invention, referred to as the light fixture (12) with the electric field energy harvesting circuit (14) and the harvesting plate (11). Said electric field energy harvesting circuit (14) comprises a storing capacitor (Cs) (20) and a power conditioning circuit (21). The preferably 50x50 cm sized copper harvesting plate (11) is located between the ceiling and the electric field emitting fluorescent bulbs (16). Splitting up the electric field by conductive materials not only results in a voltage difference, but also formation of stray in-plane capacitances as seen in Figure 3.

Said harvesting plate (11) assumes the role of obstructing field flow constituted by light bulbs (fluorescent bulbs 16) placed in overhead light fixtures (12) and transferring the electric charges to the electric field energy harvesting circuit (14).

In accordance with the present invention, in reference to Figure 3, the capacitances between fluorescent bulbs (16) and said harvesting plate (11) are denoted as intermediate capacitances (Cf) (19) while the capacitance between the harvesting plate (11) and ground are denoted as ground capacitance (Ch) (18). Stray parasitic capacitances (Cb) (17) form between the fluorescent bulbs (16) due to oscillating line voltage.

The electric charges collected on the harvesting plate (11) are transferred by displacement current (Id), and accumulated in the storing capacitor ($C_s$) (20), after being rectified by diodes D1 and D2. These diodes are for both rectifying the AC current and preventing the scavenged current from back feeding. According to the present invention, the given 'Switch' model contains a power conditioning circuit (21) to be employed for switching between harvesting and transmission/nodal operation stages.

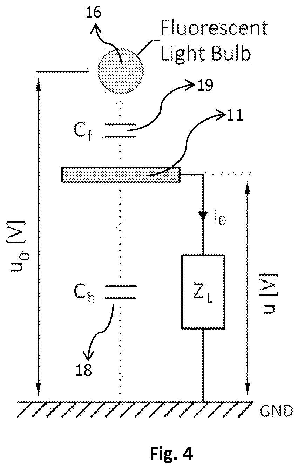

With the given model in Figure 3, it is possible to estimate the available power that can be transferred to the load. Considering the measurements taken, fluorescent bulbs (16) can be assumed as a uniform source of electric field in order to simplify the system model and therefore reduce the computational complexity. Under these circumstances, the major contributions are only due to one intermediate capacitance (19), and a serially connected ground capacitance (18) as illustrated in Figure 4. It should be noted that fringing capacitances are also neglected. The capacitances, ground capacitance ($C_h$) (18) and intermediate capacitances ($C_f$) (19), can be therefore stated as

$$C_f = \frac{2\pi\varepsilon l}{\cosh^{-1}(d/a)} \; [F] \quad \text{and} \quad C_h = \frac{\epsilon A}{H-d} \; [F]$$

where a is the fluorescent bulb (16) tube radius, l is the fluorescent bulb (16) tube length, d refers to vertical aperture between the fluorescent bulb (16) and the harvesting plate (11), and H denotes the distance from center of the fluorescent bulb (16) to ground. For the sake of clarity, bulbs and tubes are referred to interchangeably in the description of the present invention.

Regarding the resultant voltage divider formed by simplified model described in Figure 4, the equivalent impedance "Z" and the load voltage "u" can be stated as

$$Z = \frac{Z_L}{1 + jwC_h Z_L} + \frac{1}{jwC_f} \quad \text{and} \quad u = \left( \frac{Z_L}{1 + jwC_h Z_L} / Z \right).u_0$$

where "$u_0$" and "w" represent phase to ground root mean square voltage (rms voltage) and angular frequency of the power-line, respectively. If the expressions above are combined, the voltage across the load can be expressed in terms of "$Z_L$" as:

$$u = \frac{jwC_f - w^2 C_f C_h Z_L}{jw(C_f + C_h(1 + Z_L)) - w^2 C_h Z_L (C_h + C_f)}.u_0 \; [V]$$

As a result, from the above expression, the power that is transferred to the load can therefore be given as:

$$P_L = \frac{u^2}{Z_L} \ [W]$$

As mentioned above, a harvesting plate (11), which is a copper plate, is situated above the fluorescent bulbs (16) as exposed to the electric field that is being emitted. The harvesting plate (11) leaks the electric charges, and a rectifier converts them into DC as minimizing the switching time while preventing back feeding. A quick-charged, long-lasting, and high power condensed 0.1F 5.5V super-capacitor is employed to store the converted energy.

The interchange between harvesting and nodal operation modes is performed by the power conditioning circuit (21) which is simply constituted by a voltage comparator and a corresponding field effect transistor (FET). This circuit autonomously enables charge transfer when the accumulated energy is high enough to operate the sensor node, and switches back to harvesting stage when the voltage on storing capacitor (20) descends below a predefined threshold. This action not only prevents the discharge of the super-capacitor to 0V, but also allows more frequent transmissions by shortening the time exerted on power extraction. For the sake of clarity, modes and stages are referred to interchangeably in the present description of the invention.

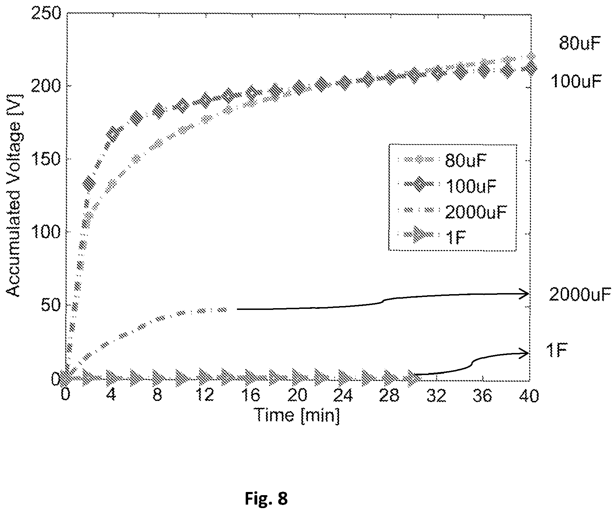

Various types of storage elements being used and thereof in terms of accumulated voltage patterns in time can be seen from Figure 8.

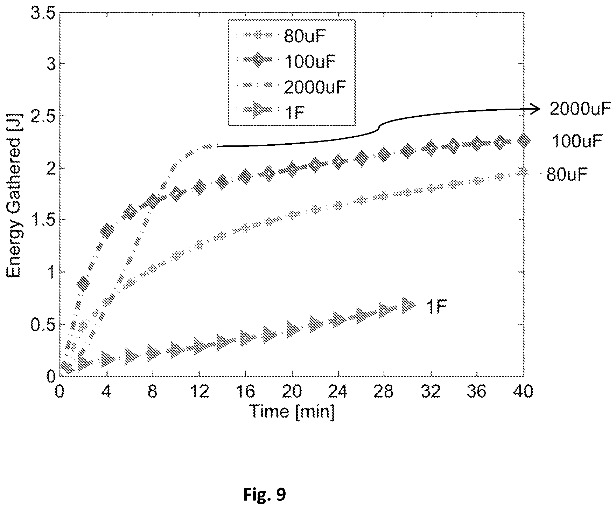

Figure 9 demonstrates that it is possible to obtain 1.25J of energy, on average, in 25 minute. When the basics of electrostatics is considered, preferably a 0.1F super-capacitor is used as it saturates at roughly 5V which is the exact voltage required for the nodal circuitry. Thus, it becomes unnecessary to employ any DC-to-DC converter component to further regulate the output voltage. As the constraints related to circuit complexity are resolved, efficiency of the harvesting system is also enhanced.

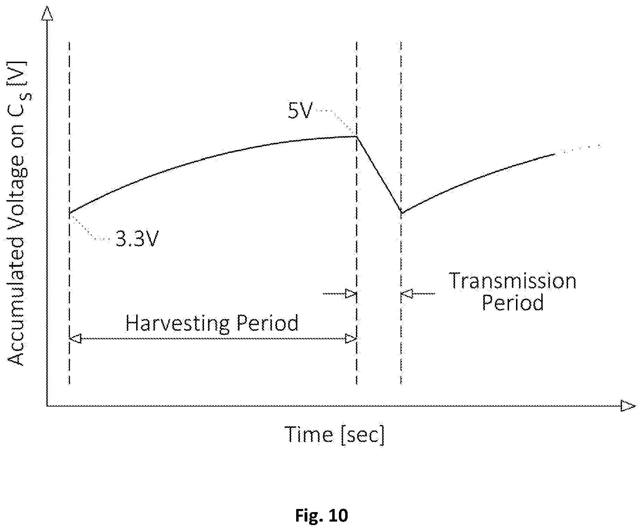

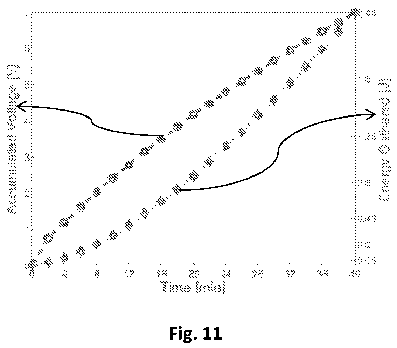

Further in reference to Figure 10, 3.3V level is set as 'go back to harvesting stage' threshold, and the resultant pattern of power conditioning circuit (21), i.e. duty cycle of the electric field energy harvesting system. After waiting a sufficient time, it is about 2.45J of energy was accumulated in said storing capacitor (20) as seen in Figure 11, referring to a remarkable improvement in harvesting efficiency.

The overhead troffer model of Fig. 1 also comprises a reflector (13). In a further variation of the present invention, said reflector (13) collects the electric field from said fluorescent bulbs (16) in a configuration where it is possible to exploit an ambient source without any specialized harvester. In the case of a conventional troffer structure, as mentioned above, manufacturing, deployment, operation, and maintenance costs/vulnerabilities of the harvesting plates (11) can therefore be eliminated in energy scavenging procedures.

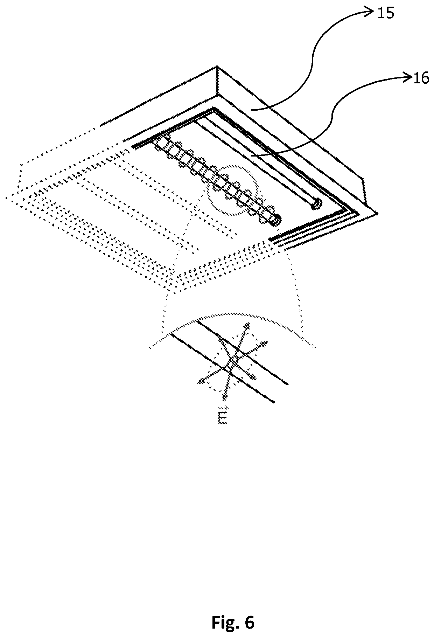

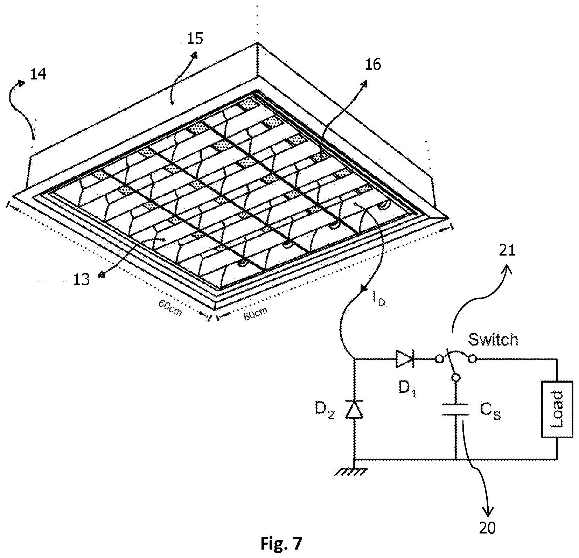

The representative illustration of a 60x60cm in size conventional overhead fluorescent light troffer that includes 4 pieces of in plane 220V AC operative fluorescent tubes is shown in Figure 7. As shown, the aluminum reflector (13) is shorted and then attached to an input terminal of the electric field energy harvesting circuit (14). The reflector (13) obstructs the surrounding (time-varying) electric field flow, although it reflects the emitting rays of the light. The electric charges in the blocked field are drained over the shorted cable through displacement current Id, and accordingly accumulated in the storing capacitor (20) after rectified by diodes. The experiments carried out indicate that it is viable to collect roughly 4J of energy in a 0.1F of super-capacitor in 15 minutes. As the electric field emitting from a fluorescent tube is propagating in a radial direction as shown in Figure 6, the size, aperture, and the angle of the harvester matter to performance.

In this embodiment, it is also possible to block and drain charges as the surface area of the reflector (13) that is being exposed to electric field serves to this purpose and the angle of the reflectors is suitable for blocking more charges.

Electric field is the only source that is neither intermittent nor dependent on the load. In other words, notwithstanding the ambient factors, harvesting energy from the field is always possible if there is voltage potential on a conducting material. That makes EFEH the most viable option for sensor energization in the sense of availability, predictability, and controllability.

In a nutshell, the present invention proposes an electric field energy harvesting system having a light fixture (12) with at least one lighting means, said electric field energy harvesting system further having a wireless autonomous device to which harvested electric field energy is supplied.

In one embodiment of the present invention, said electric field energy harvesting system comprises an electric field energy harvesting circuit (14) in physical connection with a metallic element disposed relative to said at least one lighting means.

In a further embodiment of the present invention, said electric field energy harvesting circuit (14) further has a storing capacitor (20) selectively charged by a power conditioning circuit (21) controlling the interchange between harvesting and nodal operation modes where said storing capacitor (20) is charged when said power conditioning circuit (21) is switched on, and power is supplied to said wireless autonomous device when said power conditioning circuit (21) is switched off, whereby power is supplied when the accumulated energy is sufficient to operate wireless autonomous device and harvesting mode is activated when the voltage on storing capacitor (20) descends below a predefined threshold.

In a further embodiment of the present invention, said power conditioning circuit (21) is constituted by a voltage comparator and a field effect transistor.

In a further embodiment of the present invention, said light fixture (12) comprises a metallic element in the form of a reflector (13) being shorted and attached to an input terminal of said electric field energy harvesting circuit (14).

In a further embodiment of the present invention, said light fixture (12) comprises a metallic element in the form of a harvesting plate (11) disposed between a ceiling-side surface and at least one lighting means, said harvesting plate (11) being connected to an input terminal of said electric field energy harvesting circuit (14) whereby electric charges collected on said harvesting plate (11) are transferred by displacement current and accumulated in said storing capacitor (20).

In a further embodiment of the present invention, said at least one lighting means is an electric field emitting fluorescent bulb (16).

In a further embodiment of the present invention, said storing capacitor (20) is a 0.1F 5.5V super-capacitor.

In a further embodiment of the present invention, said storing capacitor (20) is charged by a displacement current flowing through a diode.

In a further embodiment of the present invention, said storing capacitor (20) is selectively connected to and disconnected from said wireless autonomous device.

In a further embodiment of the present invention, a troffer comprising a wireless autonomous device and an electric field energy harvesting system is proposed.

**Claims**

1. An electric field energy harvesting system having a light fixture (12) with at least one lighting means, said electric field energy harvesting system further having a wireless autonomous device configured to be supplied with harvested electric field energy, and said system further comprising a power conditioning circuit (21), **characterized in that;** said electric field energy harvesting system comprises an electric field energy harvesting circuit (14) in physical connection with a metallic element disposed relative to said at least one lighting means and, said electric field energy harvesting circuit (14) further has a storing capacitor (20), wherein the power conditioning circuit is configured to selectively charge the storing capacitor (20), the power conditioning circuit (21) configured to control the interchange between a harvesting mode and a nodal operation mode, whereby the energy harvesting circuit is configured to charge said storing capacitor when the power conditioning circuit (21) is switched on, and the energy harvesting circuit is configured to supply power to said wireless autonomous device when said power conditioning circuit (21) is switched off, respectively; whereby the storing capacitor is adapted to supply power when the accumulated energy is sufficient to operate said wireless autonomous device, and the power conditioning circuit (21) is configured to activate the harvesting mode when the voltage on storing capacitor (20) descends below a predefined threshold.

2. An electric field energy harvesting system as set forth in Claim 1, **characterized in that** said power conditioning circuit (21) is constituted by a voltage comparator and a switch.

3. An electric field energy harvesting system as set forth in Claim 1 or 2, **characterized in that** said light fixture (12) comprises a metallic element in the form of a reflector (13) being shorted and attached to an input terminal of said electric field energy harvesting circuit (14).

4. An electric field energy harvesting system as set forth in Claim 1 or 2, **characterized in that** said light fixture (12) comprises a metallic element in the form of a harvesting plate (11) disposed between a ceiling-side surface of the light fixture and the at east one lighting means, said harvesting plate (11) being connected to an input terminal of said electric field energy harvesting circuit (14) thereby electric charges collected on said harvesting plate (11) are transferred by displacement current and accumulated in said storing capacitor (20).

5. An electric field energy harvesting system as set forth in Claim 4, **characterized in that** said at least one lighting means is an electric field emitting fluorescent bulb (16).

6. An electric system as set forth in Claim 3 or 4, **characterized in that** said storing capacitor (20) is a super-capacitor.

7. An electric field energy harvesting system as set forth in Claim 3 or 4, **characterized in that** it comprises a rectifier, and **in that** said storing capacitor (20) is charged by a displacement current flowing through said rectifier.

8. An electric field energy harvesting system as set forth in Claim 7, **characterized in that** the power conditioning circuit is configured to selectively connect and disconnect said storing capacitor (20) with said wireless autonomous device.

9. A troffer comprising a wireless autonomous device and an electric field energy harvesting system according to Claim 1.

**Patentansprüche**

1. System zur Gewinnung von elektrischen Feldenergie, aufweisend eine Beleuchtungsausstattung (12) mit mindestens einem Beleuchtungsmittel, wobei dieses System zur Gewinnung von elektrischen Feldenergie ferner ein autonomes Wireless-Gerät aufweist das ausgelegt ist mit der aus dem elektrischen Feld gewonnenen Energie eingespeist zu werden und dieses System ferner einen Schaltkreis für Kraftaufbereitung (21) aufweist, **dadurch gekennzeichnet, dass**;
dieses System zur Gewinnung von elektrischen Feldenergie einen Schaltkreis (14) zur Gewinnung von elektrischen Feldenergie aufweist, der mit einem bezüglich dieses mindestens einen Beleuchtungsmittel angeordneten metallischen Element physisch verbunden ist und dieser Schaltkreis (14) zur Gewinnung von elektrischen Feldenergie ferner einen Speicherkondensator (20) aufweist, wobei der Schaltkreis für Kraftaufbereitung ausgelegt ist den Speicherkondensator (20) selektiv aufzuladen, der Schaltkreis für Kraftaufbereitung (21) ausgelegt ist die Umschaltung zwischen einem Energiegewinnungsmodus und einem Knotenbetriebsmodus zu kontrollieren, wodurch der Schaltkreis zur Gewinnung von Energie in der Lage ist diesen Speicherkondensator aufzuladen wenn der Schaltkreis für Kraftaufbereitung (21) eingeschaltet ist bzw. der Schaltkreis zur Gewinnung von Energie in der Lage ist diesem autonomen Wireless-Gerät Kraft einzuspeisen wenn dieser Schaltkreis für Kraftaufbereitung (21) ausgeschaltet ist; wodurch der Speicherkondensator geeignet ist Kraft einzuspeisen wenn die aufgespeicherte Energie ausreichend ist dieses autonome Wireless-Gerät zu betreiben, und der Schaltkreis für Kraftaufbereitung (21) ausgelegt ist den Gewinnungsmodus zu aktivieren wenn die Spannung auf dem Speicherkondensator (20) unter eine vorgegebene Schwelle fällt.

2. System zur Gewinnung von elektrischen Feldenergie gemäß Anspruch 1, **dadurch gekennzeichnet, dass** dieser Schaltkreis für Kraftaufbereitung (21) aus einem Spannungskomparator und einem Schalter besteht.

3. System zur Gewinnung von elektrischen Feldenergie gemäß Anspruch 1 oder 2, **dadurch gekennzeichnet, dass** diese Beleuchtungsausstattung (12) ein metallisches Element in Form von einem Reflektor (13) aufweist, das an einem Eingangsanschluss des Schaltkreises (14) zur Gewinnung von elektrischen Feldenergie kurzgeschlossen und verbunden ist.

4. System zur Gewinnung von elektrischen Feldenergie gemäß Anspruch 1 oder 2, **dadurch gekennzeichnet dass** diese Beleuchtungsausstattung (12) ein metallisches Element in Form von einer Gewinnungsplatte (11) aufweist, die zwischen der oberseitigen Fläche der Beleuchtungsausstattung und dem mindestens einen Beleuchtungsmittel angeordnet ist, wobei diese Gewinnungsplatte (11) an einem Eingangsanschluss dieses Schaltkreises (14) zur Gewinnung von elektrischen Feldenergie verbunden ist, wodurch die auf dieser Gewinnungsplatte (11) angesammelte elektrische Ladung durch Verschiebungsstrom in diesen Speicherkondensator (20) übergeleitet und in diesem aufgespeichert wird.

5. System zur Gewinnung von elektrischen Feldenergie gemäß Anspruch 4, **dadurch gekennzeichnet, dass** das mindestens ein Beleuchtungsmittel, eine elektrisches Feld emittierende Leuchtstofflampe (16) ist.

6. System zur Gewinnung von elektrischen Feldenergie gemäß Anspruch 3 oder 4, **dadurch gekennzeichnet, dass** dieser Speicherkondensator (20) ein Super-kondensator ist.

7. System zur Gewinnung von elektrischen Feldenergie gemäß Anspruch 3 oder 4, **dadurch gekennzeichnet, dass** es einen Gleichrichter aufweist, und dass dieser Speicherkondensator (20) durch einen Verschiebungsstrom aufgeladen wird der diesen Gleichrichter durchströmt.

8. System zur Gewinnung von elektrischen Feldenergie gemäß Anspruch 7, **dadurch gekennzeichnet, dass** der Schaltkreis für Kraftaufbereitung ausgelegt ist diesen Speicherkondensator (20) selektiv mit diesem autonomen Wireless-Gerät zu verbinden und davon abzutrennen.

9. Muldenleuchte aufweisend ein autonomes Wireless-Gerät und ein System zur Gewinnung von elektrischen Feldenergie gemäß Anspruch 1.

**Revendications**

1. Système de collecte d'énergie de champ électrique, ayant un appareil d'éclairage (12) avec au moins un moyen d'éclairage,
   ledit système de collecte d'énergie de champ électrique ayant en outre un dispositif autonome sans fil configuré pour être fourni avec l'énergie collecté du champ électrique, et ledit système comportant en outre un circuit de conditionnement d'alimentation (21),
   **caractérisé en ce que;**
   ledit système de collecte d'énergie de champ électrique comporte un circuit (14) de collecte d'énergie de champ électrique en lien physique avec un élément métallique disposé en relation avec ledit au moins un moyen d'éclairage et
   ledit circuit (14) de collecte d'énergie de champ électrique possède en outre un condensateur d'accumulation (20),
   le circuit de conditionnement d'alimentation étant configuré pour charger le condensateur d'accumulation (20) de manière sélective,
   le circuit de conditionnement d'alimentation (21) configuré pour contrôler l'échange entre un mode de collecte et un mode d'opération nodale, selon lequel le circuit pour collecter l'énergie est apte à charger ledit condensateur d'accumulation lorsque le circuit de conditionnement d'alimentation (21) est activé, et
   le circuit pour collecter l'énergie est apte à fournir énergie audit dispositif autonome sans fil lorsque le circuit de conditionnement d'alimentation (21) est débranché, respectivement; par lequel le condensateur d'accumulation est apte à fournir énergie quand l'énergie accumulée est suffisant pour opérer ledit dispositif autonome sans fil, et le circuit de conditionnement d'alimentation (21) est configuré pour activer le mode de collecte quand la tension sur le condensateur d'accumulation (20) descende au-dessous d'un seuil prédéfini.

2. Système de collecte d'énergie de champ électrique selon la revendication 1, **caractérisé en ce que** ledit circuit de conditionnement d'alimentation (21) se constitue d'un comparateur de tension et d'un commutateur.

3. Système de collecte d'énergie de champ électrique selon la revendication 1 ou 2, **caractérisé en ce que** ledit appareil d'éclairage (12) comporte un élément métallique sous forme d'un réflecteur (13) court-circuité et attaché à une borne d'entrée dudit circuit pour collecter l'énergie du champ électrique (14).

4. Système de collecte d'énergie de champ électrique selon la revendication 1 ou 2, **caractérisé en ce que** ledit appareil d'éclairage (12) comporte un élément métallique sous forme d'une plaque de collecte (11) disposée entre une surface du côté plafond de l'appareil d'éclairage et le dit au moins un moyen d'éclairage, ladite plaque de collecte (11) étant connectée à une borne d'entrée dudit circuit pour collecter l'énergie du champ électrique (14), de sorte que la charge électrique collectée sur ladite plaque de collecte (11) soit transmise par un courant de déplacement audit condensateur d'accumulation (20) et accumulée dans celui-ci.

5. Système de collecte d'énergie de champ électrique selon la revendication 4, **caractérisé en ce que** ledit au moins un moyen d'éclairage est une ampoule fluorescente (16) émettant un champ électrique.

6. Système de collecte d'énergie de champ électrique selon la revendication 3 ou 4, **caractérisé en ce que** ledit condensateur d'accumulation (20) est un supercondensateur.

7. Système de collecte d'énergie de champ électrique selon la revendication 3 ou 4, **caractérisé en ce qu'il** comporte un redresseur, et **en ce que** ledit condensateur d'accumulation (20) est chargé par le courant de déplacement circulant à travers ledit redresseur.

8. Système de collecte d'énergie de champ électrique selon la revendication 7, **caractérisé en ce que** le circuit de conditionnement d'alimentation est configuré pour sélectivement connecter et déconnecter ledit condensateur d'accumulation (20) avec ledit dispositif autonome sans fil.

9. Luminaire encastrable comportant un dispositif autonome sans fil et un système de collecte d'énergie de champ électrique selon la revendication 1.

**Fig. 1**

**Fig. 2**

**Fig. 3**

**Fig. 4**

**Fig. 5**

**Fig. 6**

**Fig. 7**

Fig. 8

**Fig. 9**

**Fig. 10**

**Fig. 11**

**EP 3 545 667 B1**

**Patent documents cited in the description**

- US 2016211742 A1
- US 2004078662 A
- US 2002074898 A1